# EUROPEAN PATENT APPLICATION

(11) **EP 2 128 459 A1**
(43) Date of publication of application: **02.12.2009**
(21) Application number: 09000551.3
(22) Date of filing: 16.01.2009
(51) Int. Cl.: F16B 19/02, F16B 21/18

(54) **Fastening component, fastening unit, and device having the fastening unit**

(30) Priority: 30.05.2008 TW 97120229; 30.05.2008 TW 97120236
(71) Applicant: Hannspree, Inc., Taipei City (TW)
(72) Inventor: Torn, Sheen-Yan, Sindian City Taipei County 23 152 (TW); Liou, Guan-De, Taipei City 108 (TW); Tsai, Stephen, Siijhih City Taipei County 221 (TW)
(74) Representative: Hübner, Gerd

(57) **Abstract**

A fastening unit (4) includes a hole-defining unit and a fastening component (41). The hole-defining unit is adapted to be provided in a surface of a first body (2), defines a fastener hole (42), and is provided with at least one first engaging part (421, 421', 421'', 421a). The fastening component (41) is adapted to be fixed to a second body (3), has a post body (411) provided with a second engaging part (414, 414', 414'', 414a) equal in number to and having a structure complementing the first engaging part (421, 421', 421'', 421a), and at least one surrounding member (412, 412'). When the fastening component (41) is extended in an axial direction into the fastener hole (42) to interconnect the first and second bodies (2, 3), the first and second engaging parts cooperate so that the fastening component (41) is prevented from rotating in the fastener hole (42).

## Description

This invention relates to a fastening unit, more particularly to a fastening unit that allows for quick assembly of two bodies.

With the advancement in electronic technology, user requirements have expanded to encompass aesthetic appeal as well as functionality of an electronic device. As a result, aesthetic design of the electronic device has become a trend.

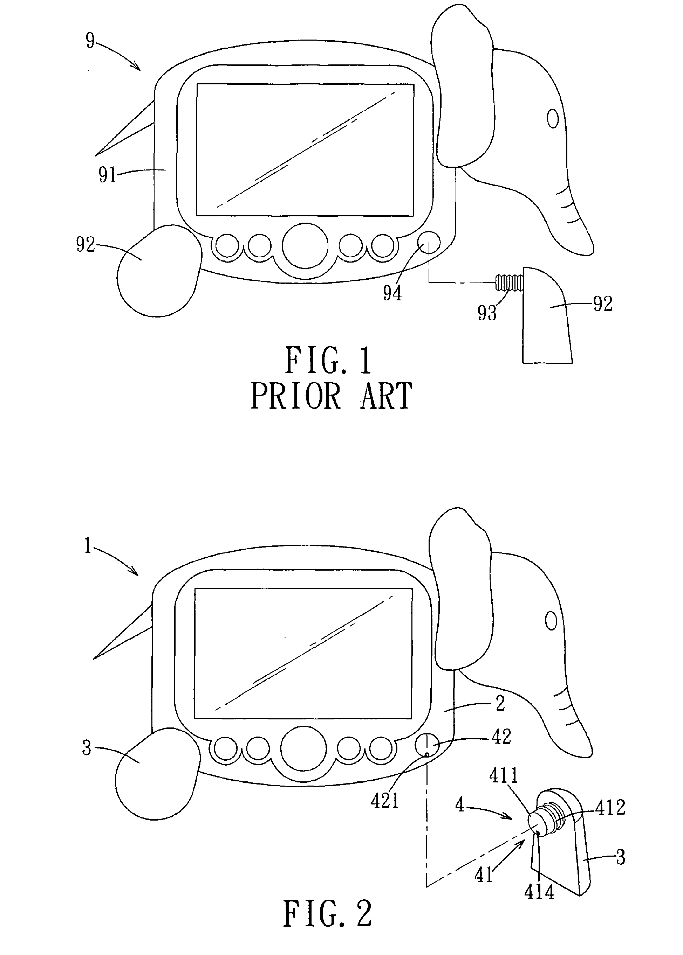

Figure 1 illustrates a conventional electronic device 9 (in this case, a display device) provided with an animal appearance. In order to enable assembly of an external connecting component 92 representing a limb of an animal to a device body 91, the external connecting component 92 comprises a threaded post 93 protruding from an outer surface of the external connecting component 92. The device body 91 is correspondingly provided with a threaded hole 94 at a desired position on an outer surface of the device body 91. When the threaded post 93 is pushed into and engages threadedly the threaded hole 94, the external connecting component 92 is assembled securely to the device body 91.

However, assembly of the external connecting component 92 to the device body 91 via threaded engagement between the threaded post 93 and the threaded hole 94 is time consuming and thus increases labor cost.

Therefore, an object of the present invention is to provide a fastening component capable of being fastened quickly in a fastener hole.

There is provided a device comprising a first body, a second body, and a fastening unit. The fastening unit includes a hole-defining unit and a fastening component according to the present invention. The hole-defining unit is provided in a surface of the first body, defines a fastener hole, and is provided with at least one first engaging part. The fastening component is fixed to the second body, is extendible in an axial direction into the fastener hole, and has a post body and at least one surrounding member. The post body is provided with a second engaging part equal in number to and having a structure complementing the first engaging part, such that the second engaging part is adapted to cooperate with the first engaging part in order to prevent rotational movement of the fastener component in the fastener hole. The surrounding member surrounds and is fixed to an outer post surface of the post body, and has at least a portion formed from a resilient material.

In an embodiment of the invention, the first engaging part is disposed at an innermost end of the fastener hole, and the second engaging part is disposed at an end surface of the post body that confronts the innermost end of the fastener hole when the fastening component is pushed into the fastener hole.

In an embodiment of the invention, the fastener hole is a circular hole, and the post body has a circular cross-section along a plane transverse to the axial direction.

With regard to structure and disposition of the first and second engaging parts, the first engaging part can be one of a protruding part and a recessed part that is offset from a center of the innermost end of the fastener hole, and the second engaging part can be the other one of the protruding part and the recessed part that is offset from a center of the end surface of the post body. Alternatively, the first engaging part can be one of a protruding part and a recessed part disposed at the innermost end of the fastener hole, and the second engaging part can be the other one of the protruding part and the recessed part disposed at the end surface of the post body, the protruding part and the recessed part having non-circular cross-sections along a plane transverse to the axial direction. In yet another alternative, the first engaging part can be a recessed part defined by a pair of opposing walls that extend toward a center of the innermost end of the fastener hole and that are inclined relative to the axial direction, and the second engaging part can be a protruding part defined by a pair of opposing walls that extend toward a center of the end surface of the post body and that are inclined relative to the axial direction.

In another embodiment of the invention, the fastener hole is a non-circular hole, and the post body has a non-circular cross-section along a plane transverse to the axial direction.

With regards to the structure, in some embodiments of the invention, the first engaging part is formed by a section of the hole-defining wall that lies outside an inscribed circle of the non-circular fastener hole. The fastener hole can be a polygonal fastener hole, while the cross-section of said post body can be a polygonal cross-section that complements the polygonal fastener hole.

With regard to the manner in which the surrounding member is fixed to the outer post surface, the surrounding member can simply surround tightly the outer post surface of the post body by virtue of having the portion formed from a resilient material. Alternatively, the outer post surface of the post body can be formed with a groove for receiving a section of the surrounding member so as to retain the surrounding member therein. In yet another alternative, the surrounding member can be adhered to the outer post surface of the post body.

The surrounding member can have a shape of a closed ring and be formed entirely from a resilient material. Alternatively, the surrounding member can have a shape of an open ring, such as a C-ring, and be provided with a core portion and a sheath portion that covers the core portion, the sheath portion being made of a resilient material, and the core portion being made of a material that is rigid compared to the resilient material of the sheath portion.

When the fastening component is pushed into the fastener hole to interconnect the first and second bodies, friction provided by the surrounding member of the fastening component resists movement of the fastening component in the fastener hole along an axial direction of the fastener hole, and the first engaging part and the second engaging part cooperate so that the fastening component is prevented from rotating in the fastener hole. The first and second bodies are thus quickly and securely assembled.

According to another aspect of the present invention, there is also provided a fastening unit adapted for interconnecting first and second bodies, the fastening unit comprising a hole-defining unit adapted to be provided in a surface of the first body, defining a fastener hole, and provided with at least one first engaging part, and the fastener component adapted to be fixed to the second body.

Other features and advantages of the present invention will become apparent in the following detailed description of the preferred embodiments with reference to the accompanying drawings, of which:
Figure 1 is a schematic view of a conventional electronic device;
Figure 2 is a perspective view of a first preferred embodiment of a device according to the present invention, showing first and second bodies of the device prior to assembly;
Figure 3 is a partly exploded perspective view of a fastening component of the first preferred embodiment;
Figure 4 is a cross-sectional view to illustrate a fastener hole and the fastening component of the first preferred embodiment taken along line IV-IV in Figure 3;
Figure 5 is a perspective view of a fastening component of a second preferred embodiment of a device according to the present invention;
Figure 6 is a cross-sectional view to illustrate a fastener hole and the fastening component of the second preferred embodiment taken along line VI-VI in Figure 5;
Figure 7 is a perspective view of a fastening component of a third preferred embodiment of a device according to the present invention;
Figure 8 is a cross-sectional view to illustrate a fastener hole and the fastening component of the third preferred embodiment taken along line VIII-VIII in Figure 7;
Figure 9 is a perspective view of a fourth preferred embodiment of a device according to the present invention, showing first and second bodies of the device prior to assembly;
Figure 10 is a partly exploded perspective view of a fastening component of the fourth preferred embodiment;
Figure 11 is an end view to illustrate a second engaging part of the fastening component of the fourth preferred embodiment;
Figure 12 is a fragmentary schematic view to illustrate a first engaging part of a hole-defining wall of the fourth preferred embodiment;
Figure 13 is a partly exploded perspective view of a fastening component of a fifth preferred embodiment of a device according to the present invention; and
Figure 14 is a partly exploded perspective view of a modified fastening component of the fifth preferred embodiment of a device according to the present invention.

Before the present invention is described in greater detail with reference to the accompanying preferred embodiments, it should be noted herein that like elements are denoted by the same reference numerals throughout the disclosure.

Figure 2 illustrates a first preferred embodiment of a device 1 according to the present invention. The device 1 comprises a first body 2, a second body 3, and a fastening unit 4. In this embodiment, the device 1 is an electronic device having a custom-designed form. In particular, the first body 2 is a display device, and the second body 3 is an external connecting component. However, the device 1 of the present invention is not limited to the electronic device, and can be any device that comprises the first and second bodies 2,3 and the fastening unit 4, wherein the first and second bodies 2,3 are separate bodies that can be interconnected by the fastening unit 4.

The fastening unit 4 includes a hole-defining unit and a fastening component 41. The hole-defining unit is provided in a surface of the first body 2 and defines a fastener hole 42. The fastening component 41 is fixed to the second body 3 and is extendible in an axial direction into the fastener hole 42. However, the arrangement of the fastening component 41 and the hole-defining unit is not limited to what is described above. For example, in a case where the first body 2 is the external connecting component and the second body 3 is the display device, the hole-defining unit can still be provided in the first body 2, and the fastening component 41 can be fixed to the second body 3.

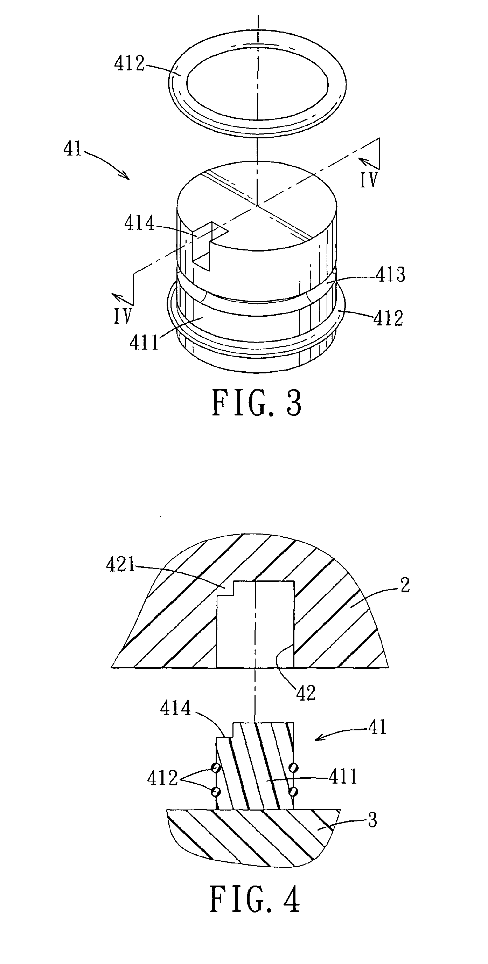

Referring to Figures 2 and 4, the fastener hole 42 is a circular hole, and the hole-defining unit is a circular hole-defining wall provided with a first engaging part 421. Referring to Figure 3, the fastening component 41 is provided with a post body 411 having a circular cross-section along a plane transverse to the axial direction, and two surrounding members 412 that surround and that are fixed to an outer post surface of the post body 411. The post body 411 is provided with a second engaging part 414 that is equal in number to and that has a structure complementing the first engaging part 421.

In this embodiment, the first engaging part 421 is a protruding part disposed at an innermost end of the fastener hole 42 adjacent to a periphery of the fastener hole 42, and the second engaging part 414 is a recessed part disposed at an end surface of the post body 411 adjacent to a periphery of the end surface. When the fastening component 41 is pushed into the fastener hole 42, the end surface of the post body 411 confronts the innermost end of the fastener hole 42.

In this embodiment, the fastening component 41 has one end embedded in the second body 3. That is, the fastening component 41 can be pre-fabricated, and one end of the fastening component 41 is embedded in the second body 3 during fabrication of the second body 3 through an injection molding or foam molding process. The manner in which the fastening component 41 is fixed to the second body 3 is not limited to what is described herein. In practice, the fastening component 41 and the second body 3 can be integrally formed.

Referring to Figure 3, in this embodiment, the number of surrounding members 412 is two. However, the number of surrounding members 412 can be just one, or three or more. Each of the surrounding members 412 has a shape of a closed ring, and is made of silicone resin, rubber, or another kind of resilient material. In this embodiment, the outer post surface of the post body 411 is formed with a pair of spaced apart annular grooves 413 for receiving sections of the surrounding members 412. The resilient material of the surrounding members 412 enables retention of the surrounding members 412 in the annular grooves 413, thereby fixing the surrounding members 412 on the outer post surface of the post body 411.

Alternatively, the outer post surface of the post body 411 can be designed without the annular grooves 413, and the surrounding members 412 can, by virtue of the resilient material, surround tightly the outer post surface of the post body 411. In yet another alternative, an adhesive (not shown) can be used to adhere the surrounding members 412 to the outer post surface of the post body 411. Of course, the adhesive can also be used to adhere the surrounding members 412 in the annular grooves 413, thereby achieving the effect of fixing the surrounding members 412 to the outer post surface of the post body 411.

With further reference to Figures 2 and 4, when the fastening component 41 is pushed into the fastener hole 42 to interconnect the first and second bodies 2, 3, the surrounding members 412 are compressed and produce friction between the post body 411 and the hole-defining wall of the hole-defining unit, thereby preventing easy removal of the fastener component 41 from the fastener hole 42 along the axial direction. The first engaging part 421 (i.e., the recessed part disposed at the end surface of the post body 411) and the second engaging part 414 (i.e., the protruding part disposed at an innermost end of the fastener hole 42) cooperate so that the fastening component 41 is prevented from rotating in the fastener hole 42. The fastening component 41 is thereby securely fastened in the fastener hole 42 and is not easily removed.

The second and third preferred embodiments of a device 1 according to the present invention differ from the first preferred embodiment only in the structure of the first and second engaging parts 421,414.

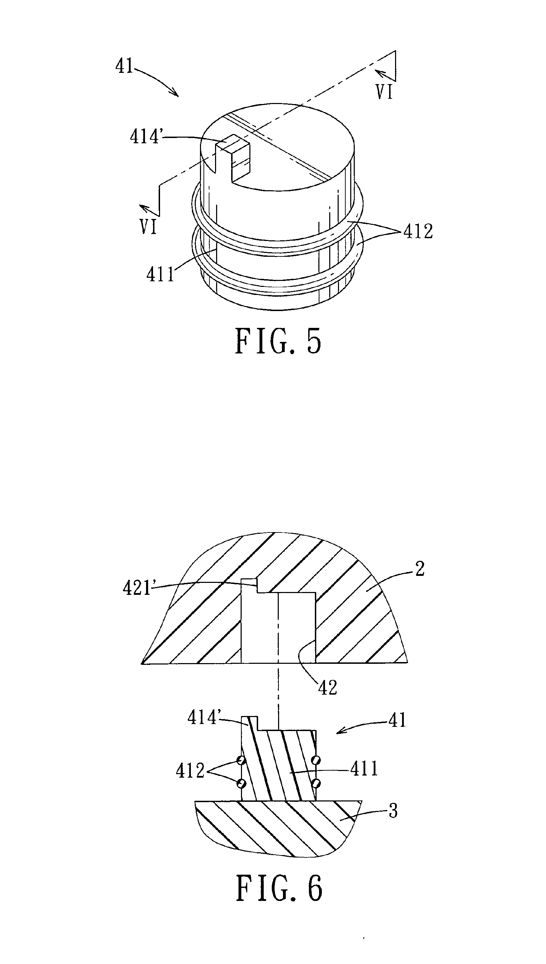

Referring to Figures 5 and 6, in the second preferred embodiment, the first engaging part 421' is a recessed part disposed adjacent to a periphery of the fastener hole 42, and the second engaging part 414' is a protruding part disposed adjacent to a periphery of the end surface of the post body 411. As in the previous embodiment, the second engaging part 414' is equal in number to and has a structure complementing the first engaging part 421' , and the second and first engaging parts 414' , 421' cooperate so that the fastening component 41 is prevented from rotating in the fastener hole 42.

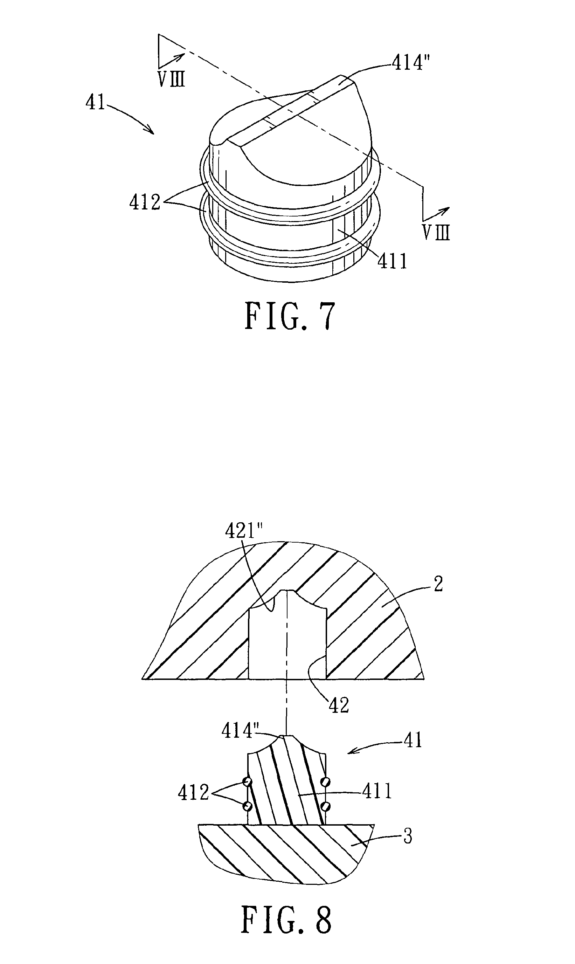

Referring to Figures 7 and 8, in the third preferred embodiment, the first engaging part 421" is a recessed part defined by a pair of opposing walls that extend toward a center of the innermost end of the fastener hole 42 and that are generally inclined relative to the axial direction, and the second engaging part 414" is a protruding part defined by a pair of opposing walls that extend toward a center of the end surface of the post body 411 and that are generally inclined relative to the axial direction. As in the previous embodiments, the second engaging part 414" is equal in number to and has a structure complementing the first engaging part 421'' , and the second and first engaging parts 414'', 421" cooperate so that the fastening component 41 is prevented from rotating in the fastener hole 42.

The structure and disposition of the first and second engaging parts 421,414 are not limited to what is described herein. For example, the first engaging part 421 can be offset from a center of the innermost end of the fastener hole 42, and the second engaging part 414 can be offset from a center of the end surface of the post body 411, and thus prevent the fastening component 41 from rotating in the fastener hole 42. Moreover, the first and second engaging parts 421, 414 can have non-circular cross-sections along a plane transverse to the axial direction, thereby similarly preventing rotation of the fastening component 41 in the fastener hole 42.

The fourth preferred embodiments of a device 1 according to the present invention differs from the previous preferred embodiments only in the structures of the first and second engaging parts 421a, 414a and in the shape of the post body 41 and the fastener hole.

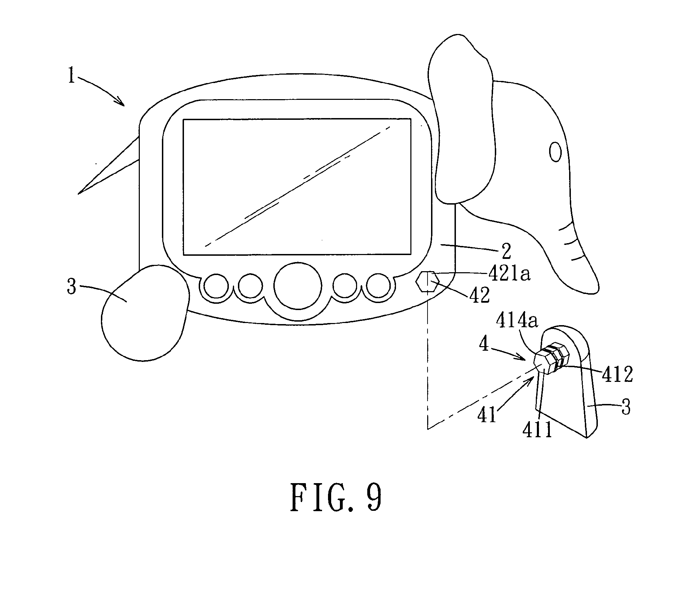

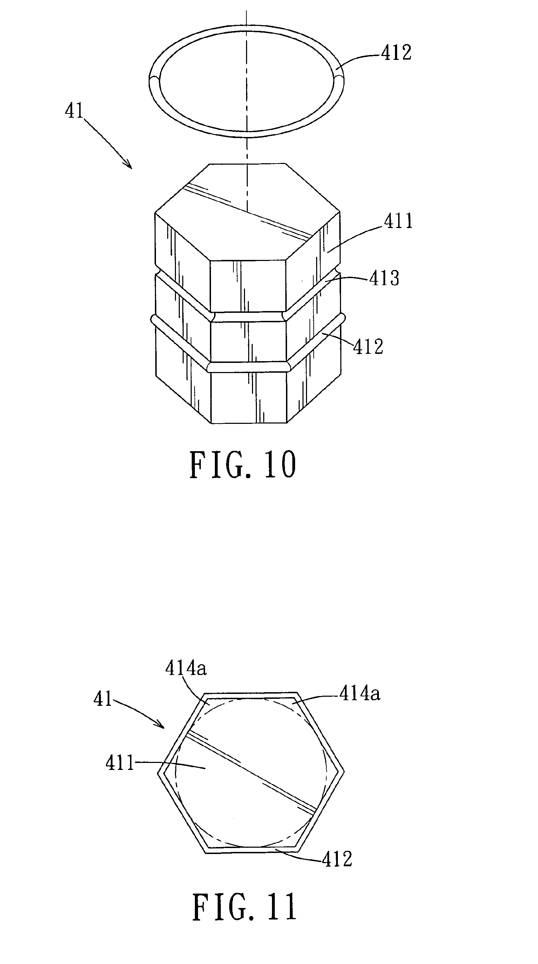

Referring to Figures 9 to 12, in this fourth embodiment, the post body 411 is provided with a plurality of the second engaging parts 414a that are equal in number to and that have a structure complementing the first engaging parts 421a.

In this embodiment, the post body 411 has a non-circular cross-section along a plane transverse to the axial direction. Preferably, the post body 411 has a polygonal cross-section along a plane transverse to the axial direction. In this embodiment, the post body 411 has a hexagonal cross-section, and each of the second engaging parts 414a is formed by one of six sections of the post body 411 that lie outside an inscribed circle of the hexagonal cross-section of the post body 411. The hole-defining wall defines a hexagonal fastener hole 42 that complements the hexagonal cross-section of the fastening component 41, and each of the first engaging parts 421a is formed by one of six sections of the hole-defining wall that lie outside an inscribed circle of the hexagonal fastener hole 42.

However, the shape of the cross-section of the post body 411 and the shape of the fastener hole 42 are not limited to a polygonal shape, and the number of the first and second engaging parts 414a, 421a can be just one. For example, the non-circular cross-section of the post body 411 can have a shape that has just one corner and that is otherwise nearly circular, and the non-circular fastener hole 42 can have a shape that has just one corner and that is otherwise nearly circular, and that complements the cross-section of the post body 411. In sum, the shape of the cross-section of the post body 411 and the shape of the fastener hole 42 only need to be complementary and non-circular to be within the scope of the present invention.

The fifth preferred embodiment of a device 1 according to the present invention differs from the previous embodiments only in the design of the surrounding member 412.

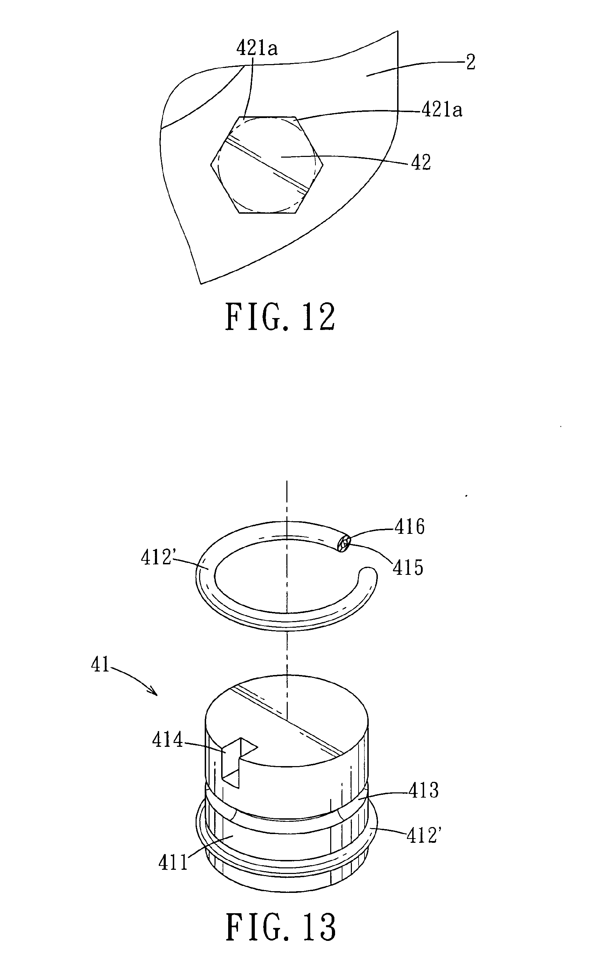

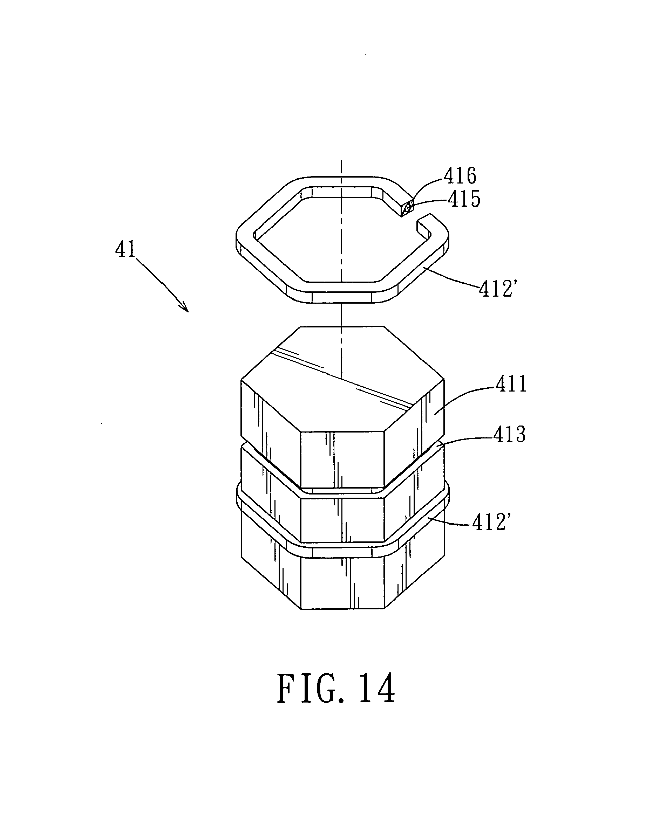

Referring to Figures 13 and 14, in the fifth preferred embodiment, the surrounding member 412' has a shape of a C-ring, and is provided with a core portion 415 and a sheath portion 416 that covers the core portion 415. The sheath portion 416 is made of silicone resin, rubber, or another type of resilient material, and is deformable so as to provide friction when the fastening component 41 is pushed into the fastener hole 42. The core portion 415 is made of a material that is rigid compared to the resilient material of the sheath portion 416 in order to maintain under force the shape of a C-ring, which is more easily retained within the annular groove 413 of the post body 411. As in the previous embodiments, the surrounding member 412' can be adhered to the outer post surface of the post body 411, or adhered in the annular groove 413 formed in the outer post surface of the post body 411 so as to be fixed to the outer post surface of the post body 411.

In sum, when the fastening component 41 is pushed into the fastener hole 42, the surrounding members 412, 412' are compressed and provide friction between the outer post surface of the post body 411 and the hole-defining wall so that the fastening component 41 is not easily removed from the fastener hole 42 along the axial direction. Moreover, the first engaging part 421, 421' , 421'', 421a and the second engaging part 414, 414', 414", 414a cooperate so that the fastening component 41 is prevented from rotating in the fastener hole 42. Therefore, when it is desired to interconnect the first and second bodies 2,3, it is only necessary to extend the fastening component 41 into the fastener hole 42. The device 1 of the present invention is thus capable of quick assembly.

## Claims

1. A fastening component (41) adapted to be extended in an axial direction into a fastener hole (42) defined by a hole-defining wall, the hole-defining wall having at least one first engaging part (421, 421', 421", 421a), said fastening component (41) comprising a post body (411) provided with at least one second engaging part (414, 414', 414'', 414a) equal in number to and having a structure complementing the first engaging part (421, 421', 421", 421a),
**characterized in that**
said fastening component (41) further comprises at least one surrounding member (412, 412') that surrounds and that is fixed to an outer post surface of said post body (411), and that has at least one portion made of a resilient material, and **in that** said first engaging part (421, 421', 421", 421a) and said second engaging part (414, 414', 414", 414a) cooperate so that said fastening component (41) is prevented from rotating in said fastener hole (42) when said fastening component (41) is pushed into said fastener hole (42).

2. The fastening component (41) according to claim 1, wherein the first engaging part (421, 421', 421") is disposed at an innermost end of the fastener hole (42), and wherein said second engaging part (414, 414', 414") is disposed at an end surface of said post body (411) that confronts the innermost end of the fastener hole (42) when the fastening component (41) is pushed into the fastener hole (42).

3. The fastening component (41) according to claim 1 or 2, wherein the hole-defining wall is a circular hole-def ining wall, and said post body (41) has a circular cross-section along a plane transverse to the axial direction.

4. The fastening component (41) according to any one of claims 1 to 3, wherein the first engaging part (421, 421', 421'') is one of a protruding part and a recessed part and is offset from a center of the innermost end of the fastener hole (42), and said second engaging part (414, 414', 414") is the other one of said protruding part and said recessed part and is offset from a center of said end surface of said post body (411).

5. The fastening component (41) according to any one of claims 1 to 3, wherein the first engaging part (421, 421', 421") is one of a protruding part and a recessed part disposed at the innermost end of the fastener hole (42), and said second engaging part (414, 414', 414") is the other one of said protruding part and said recessed part disposed at said end surface of said post body (411), said protruding part and said recessed part having non-circular cross-sections along a plane transverse to the axial direction.

6. The fastening component (41) according to any one of claims 1 to 3, wherein the first engaging part (421'') is a recessed part defined by a pair of opposing walls that extend toward a center of the innermost end of the fastener hole (42) and that are generally inclined relative to the axial direction, and said second engaging part (414") is a protruding part defined by a pair of opposing walls that extend toward a center of said end surface of said post body (411) and that are generally inclined relative to the axial direction.

7. The fastening component (41) according to claim 1, wherein the hole-defining wall is a non-circular hole-defining wall, the first engaging part (421a) being formed by a section of the hole-defining wall that lies outside an inscribed circle of the non-circular fastener hole (42), and wherein said post body (411) has a non-circular cross-section along a plane transverse to the axial direction, and said second engaging part (414a) is formed by a section of said post body (411) that lies outside an inscribed circle of said non-circular cross-section of said post body (411).

8. The fastening component (41) according to claim 7, wherein the fastener hole (42) is a polygonal fastener hole, and said cross-section of said post body (411) is a polygonal cross-section that complements the polygonal fastener hole (42).

9. The fastening component (41) according to any one of claims 1 to 8, wherein said outer post surface of said post body (411) is formed with a groove (413) for receiving a section of said surrounding member (412, 412').

10. The fastening component (41) according to any one of claims 1 to 9, wherein said surrounding member (412, 412') is adhered to said outer post surface of said post body (411).

11. The fastening component (41) according to any one of claims 1 to 10, wherein said surrounding member (412, 412') has a shape of one of a closed ring and a C-ring.

12. The fastening component (41) according to any one of claims 1 to 10, wherein said surrounding member (412') has a shape of a C-ring, and is provided with a core portion (415) and a sheath portion (416) that covers said core portion (415), said sheath portion (416) being made of said resilient material.

13. The fastening component (41) according to any one of claims 1 to 12, wherein said resilient material of said surrounding member (412, 412') is one of a silicone resin material and a rubber material.

14. A fastening unit (4) adapted for interconnecting a first body (2) and a second body (3), said fastening unit (4) comprising:
a hole-defining unit adapted to be provided in a surface of the first body (2), defining a fastener hole (42), and provided with at least one first engaging part (421, 421', 421", 421a); and
a fastening component (41) adapted to be fixed to the second body (3);
**characterized in that** the fastening component (41) is a fastening component according to any one of claims 1 to 13.

15. The fastening unit (4) according to claim 14, wherein said fastening component (41) is pre-fabricated, and has one end embedded in the second body (3) during fabrication of the second body (3) through one of an injection molding and a foam molding process.

16. The fastening unit (4) according to claim 14, wherein said fastening component (41) and said second body (3) are integrally formed.

17. A device (1) comprising:
a first body (2); and
a second body (3);
**characterized in that** said device (1) further comprises a fastening unit (4) according to any one of claims 14 to 16.

18. The device (1) according to claim 17, wherein said first body (2) is one of a display device and an external connecting component, and said second body (3) is the other of said display device and said external connecting component.
